# DEMANDE DE BREVET EUROPEEN

(11) **EP 1 083 376 A1**
(43) Date de publication de la demande: **14.03.2001**
(21) Numéro de dépôt: 00402477.4
(22) Date de dépôt: 08.09.2000
(51) Int. Cl.: F16L 33/08

(54) **Collier de serrage à vis tangente**

(30) Priorité: 10.09.1999 FR 9911340
(71) Demandeur: Serflex, 94500 Champigny-sur-Marne (FR)
(72) Inventeur: Le Noan, Jacques, 78700 Conflans Sainte Honorine (FR); Busson, Jean-Pierre, 93160 Noisy-Le-Grand (FR)
(74) Mandataire: Intes, Didier Gérard André

(57) **Abrégé**

Collier de serrage comprenant une bande de métal (10) enroulée sur elle-même, une vis de serrage (12) et un boîtier (14) qui présente une semelle (18) et un capot (16). Le boîtier est fixé par sa semelle (18) à la première extrémité (10A) de la bande dont la deuxième extrémité (10B) peut être insérée dans le capot de ce boîtier pour serrer le collier par vissage de la vis. Les moyens de fixation comprenant au moins une fenêtre (20, 22) pratiquée dans la première extrémité (10A) de la bande (10) et au moins une patte ou extension (34B, 36B) qui est solidaire de la semelle (18) du boîtier (14) et qui pénètre dans cette fenêtre, comportent au moins un ensemble de calage longitudinal comprenant un ajour (26) pratiqué dans une région médiane (18) du boîtier et un bossage (30), formé en saillie sur la face inférieure (11A) de la bande et pénétrant dans ledit ajour.

## Description

La présente invention concerne un collier de serrage du type "à vis tangente", comprenant une bande de métal enroulée sur elle-même, une vis de serrage et un boîtier fixé à une première extrémité de la bande.

Le boîtier comporte un capot disposé du côté extérieur de la bande et une semelle qui s'étend contre la face intérieure de la bande et qui est fixée à cette dernière par des moyens de fixation, lesdits moyens de fixation comprenant au moins une fenêtre pratiquée dans une première extrémité de la bande et au moins une patte ou extension qui est solidaire de la semelle du boîtier et qui pénètre dans cette fenêtre, la vis ayant un fût fileté qui est engagé dans le capot, la deuxième extrémité de la bande étant susceptible d'être insérée dans le capot, entre le fût fileté de la vis et la première extrémité de la bande, le fût fileté de la vis étant susceptible de coopérer avec ladite deuxième extrémité pour serrer le collier.

On connaît des colliers de serrage de ce type, par exemple par les documents GB 660 981, US 2 395 273. Dans la région des fenêtres pratiquées dans la première extrémité de la bande, la résistance de la bande à la traction et à la torsion est plus faible que dans les parties sensiblement pleines de cette bande.

Lors du serrage du collier, une force de traction élevée s'exerce sur la bande. Les efforts de réaction à cette traction s'appliquent sur le boîtier qui réagit sur la bande du collier dans la région des moyens de fixation de ce boîtier à cette bande. Ces moyens de fixation sont donc fortement sollicités, en particulier lors du serrage du collier, sous l'effet des efforts de traction.

Lorsque ces moyens de fixation comprennent des fenêtres pratiquées dans la bande, ces dernières correspondent à une zone de fragilité de cette bande. Il en résulte un risque de détérioration du collier dans cette zone lorsque, en particulier lors du serrage, les efforts de traction sont élevés.

On connaît par ailleurs des colliers de serrage de ce type, par exemple par le document US 3 351 989, pour lesquels des points de soudure sont en outre pratiqués entre le boîtier et la bande pour renforcer le collier.

La présente invention s'applique à un collier à vis tangente et a pour but d'améliorer les moyens de fixation du boîtier à la bande de ce collier pour mieux répartir les efforts de réaction dus aux forces de traction occasionnées par le serrage du collier et pour faire en sorte que ces efforts concernent une zone de la bande moins fragilisée.

L'invention s'applique en particulier à des colliers de serrage à vis tangente dans lesquels les moyens de fixation du boîtier par rapport à la bande comprennent au moins une fenêtre pratiquée dans la première extrémité de la bande et au moins une patte ou extension qui est solidaire de la semelle du boîtier et qui pénètre dans cette fenêtre.

Ce but est atteint grâce au fait que les moyens de fixation comportent au moins un ensemble de calage longitudinal comprenant un ajour pratiqué dans une région médiane de la semelle du boîtier et un bossage, formé en saillie sur la face intérieure de la bande et pénétrant dans ledit ajour.

Le bossage pratiqué dans la bande ne diminue pas sensiblement la résistance mécanique de cette dernière. Si il est de dimension réduite, il a même plutôt tendance à augmenter localement cette résistance. Le ou les ajours sont pratiqués dans une région médiane de la semelle et peuvent présenter des dimensions telles qu'ils affectent peu la résistance mécanique de cette dernière.

Couramment, dans les colliers de serrage à vis tangente, la bande du collier est réalisée à partir d'un feuillard de faible épaisseur. Le métal qui constitue le boîtier présente quant à lui une épaisseur légèrement supérieure et il est plus résistant. Par conséquent, le fait que l'ajour de l'ensemble de calage longitudinal soit pratiqué dans la semelle du boîtier n'affecte pas la résistance mécanique de ce boîtier dans des proportions telles qu'il pourrait en résulter un risque de détérioration du collier sous l'effet des efforts de traction normalement appliqués à ce collier lors de son serrage ou légèrement supérieurs à ces efforts "normaux".

Grâce aux dispositions de l'invention, les efforts de réaction à la traction sur la bande s'exercent principalement sur le ou les ensembles de calage longitudinal, avec une éventuelle répartition sur les autres éléments des moyens de fixation.

Avantageusement, le bossage du ou de chaque ensemble de calage longitudinal comporte un bord vif orienté à l'opposé de l'extrémité libre de la première extrémité de la bande et coopérant avec le bord de l'ajour correspondant situé en vis-à-vis.

Le bord vif du bossage coopère en butée avec le bord de l'ajour correspondant sans aucun risque de glissement relatif, même sous l'effet d'efforts de traction élevés.

Ce bossage est avantageusement formé par un crevé, c'est-à-dire par un picot repoussé sur la face intérieure de la bande jusqu'à son cisaillage partiel par rapport à cette bande, le bord cisaillé formant le bord vif évoqué ci-dessus.

Selon une disposition avantageuse, le collier comporte deux ensembles de calage longitudinal disposés de part et d'autre d'un axe longitudinal médian de la bande.

Ainsi, les efforts de traction se répartissent de manière sensiblement homogène sur chacun des deux ensembles de calage longitudinal.

L'invention sera bien comprise et ses avantages apparaîtront mieux à la lecture de la description détaillée qui suit, d'un mode de réalisation représenté à titre d'exemple non limitatif. La description se réfère aux dessins annexés, sur lesquels :
- la figure 1 est une vue partielle de côté d'un collier à vis auquel s'applique l'invention,
- la figure 2 est une vue de dessous, prise selon la flèche II de la figure 1, montrant seulement la première extrémité de la bande munie du boîtier,
- les figures 3 et 4 sont des coupes respectivement prises selon les lignes III-III et IV-IV de la figure 2,
- la figure 5 montre, en perspective, la première extrémité de la bande avant la fixation du boîtier sur cette dernière.
- la figure 6 montre, selon une variante de réalisation, la face extérieure de la première extrémité de la bande, et
- la figure 7 est une vue en perspective de la variante de la figure 6, sur laquelle la face intérieure de la bande est tournée vers le haut.

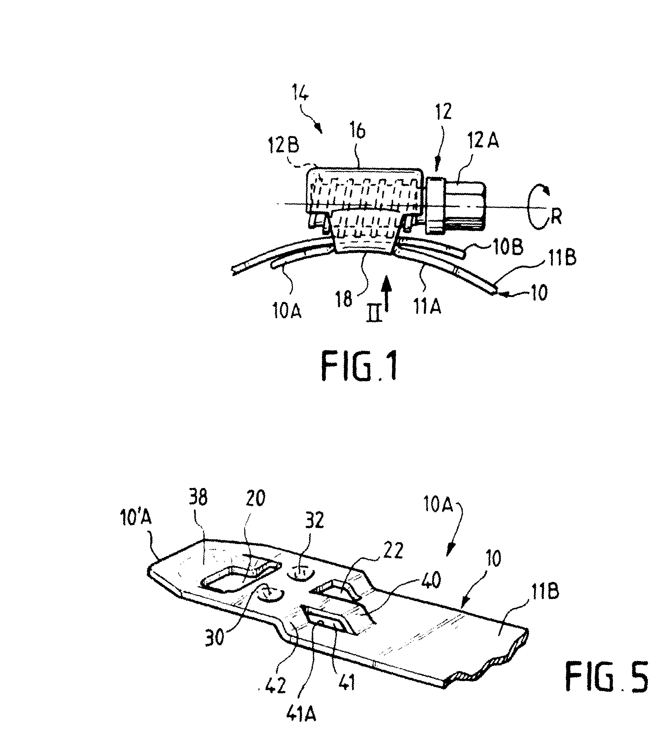

Le collier de la figure 1 comporte une bande de métal 10 enroulée sur elle-même, dont seules les parties d'extrémité 10A et 10B sont représentées. Le collier comporte une vis de serrage 12 disposée dans un boîtier 14, qui comporte un capot 16 s'étendant du côté extérieur du collier et une semelle 18, fixée à la première extrémité 10A et la bande et disposée contre la face intérieure 11A de cette dernière. La vis 12 présente une tête de vissage 12A disposée à l'extérieur du capot 16 et un fût fileté 12B, indiqué en trait interrompu, qui s'étend à l'intérieur de ce capot.

On considère que la direction allant vers l'intérieur est celle qui est dirigée vers le centre du cercle formé par l'enroulement de la bande sur le collier.

La première extrémité 10B de la bande est insérée dans le capot, entre la face extérieure 11B de la bande et le fût fileté de la vis.

Classiquement, au moins la deuxième extrémité 10B de la bande est pourvue de surfaces d'appui (fentes ou reliefs) en crémaillère, avec lesquelles les filets de la vis sont aptes à coopérer lors du vissage de cette dernière dans le sens R pour serrer le collier.

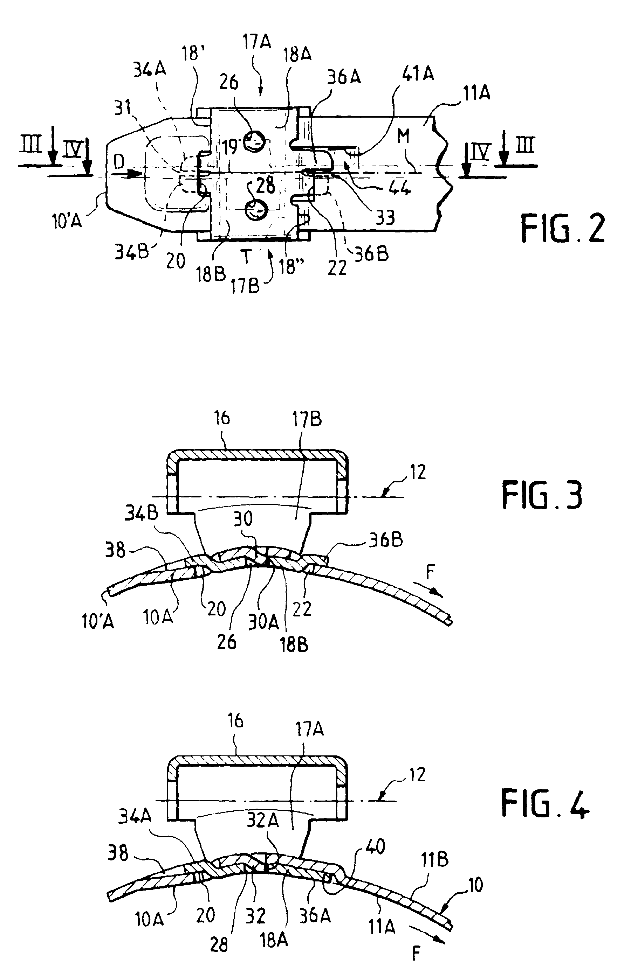

Sur la figure 2, on voit que les moyens de fixation du boîtier par rapport à la bande comprennent deux fenêtres, 20 et 22, qui sont pratiquées dans la bande et qui sont espacées longitudinalement l'une de l'autre, ainsi que des pattes qui forment des prolongements longitudinaux de la semelle du boîtier et qui sont engagées dans ces fenêtres, de manière à apparaître sur la face extérieure 11B de la bande. L'espacement longitudinal des fenêtres 20 et 22 est sensiblement égal à la longueur que présente le boîtier dans la zone de ce dernier qui est dépourvue des extensions.

Ainsi, les moyens de fixation comprennent deux ensembles de fixation respectivement disposés de part et d'autre d'une région T de la semelle transversale à la bande.

Deux ajours, respectivement 26 et 28, sont pratiqués dans une région médiane de la semelle 18 du boîtier. Comme on le voit mieux sur les figures 3 et 4. deux bossages, respectivement 30 et 32, sont formés en saillie sur la face intérieure de la bande, à la première extrémité 10A de cette dernière, et pénètrent ainsi chacun dans l'ajour correspondant. Ainsi, sur la figure 3, on voit l'ajour 26 dans lequel pénètre le bossage 30, tandis que la figure 4 montre l'ajour 28 dans lequel pénètre le bossage 32. Les moyens de fixation du boîtier à la bande comprennent deux ensembles de calage longitudinal comprenant chacun un ajour et un bossage qui lui est associé, ces deux ensembles étant disposés de part et d'autre de l'axe longitudinal médian de la bande M.

Chacun des bossages présente un bord vif, respectivement 30A et 32A, qui coopère avec un bord de l'ajour correspondant. Le bord vif est tourné du côté opposé à l'extrémité libre 10'A de la première extrémité 10A de la bande dans laquelle est pratiqué le bossage qui porte ce bord libre. En effet, lors du serrage de la bande, la première extrémité 10A de cette dernière est sollicitée en traction par rapport au boîtier dans le sens de la flèche F. Les effets de réaction du boîtier s'exercent donc sur le bord libre du bossage et le bord de l'ajour avec lequel il coopère. Ainsi, le collier est renforcé sans avoir recours à des points de soudure entre le boîtier et la bande.

Dans l'exemple avantageux représenté, les bossages 30 et 32 sont tous deux formés par des crevés, qui sont réalisés par une simple opération de repoussage et de cisaillage et qui ont l'avantage de présenter les bords libres précédemment évoqués.

Ces bords vifs sont cisaillés sur une petite partie du pourtour des bossages, par exemple sur 1/4 de tour ou 1/3 de tour, pour éviter que les crevés n'aient tendance à se replier sous l'effet d'efforts de traction élevés.

Les ajours 26 et 28 sont pratiqués dans des régions médianes de la semelle 18 du boîtier, c'est-à-dire sensiblement à égale distance des bords avant 18' et arrière 18" de cette semelle. Les bossages 30 et 32 sont quant à eux ménagés dans une région de la première extrémité 10A de la bande qui se trouve entre les fenêtres 20 et 22 à travers lesquelles passent les pattes de fixation du boîtier et sensiblement à égale distance de ces fenêtres.

Ainsi, les ajours 26 et 28 et les bossages 30 et 32 sont ménagés dans des régions de la semelle du boîtier et de la première extrémité de la bande non affectées autrement par des découpes ou analogues de nature à diminuer localement leur résistance mécanique.

Le capot 16 du boîtier présente une paroi axiale (dans le sens de la longueur de la bande) qui a la forme d'une portion de cylindre pour recevoir la vis 12. A partir de cette portion de cylindre, s'étendent des ailes 17A et 17B, chacune d'entre elles ayant une partie qui forme une paroi latérale du boîtier et une partie d'extrémité, respectivement 18A et 18B, qui est repliée contre la face intérieure 11A de la bande.

Ces parties d'extrémité 18A et 18B forment, à elles deux, la semelle 18. Les bords longitudinaux d'extrémité de ces ailes sont placés bord à bord comme l'indique la ligne 19 de la figure 2.

Les extensions de la semelle pénétrant dans les fenêtres 20 et 22 sont réalisées de la manière suivante. La partie 18A de l'aile 17A présente, sensiblement dans le prolongement de son bord longitudinal d'extrémité, une première patte 34A qui s'étend vers l'extrémité 10'A de la bande et une deuxième patte 36A qui s'étend dans l'autre sens. De même, la partie 18B de l'aile 17B présente une première patte 34B et une deuxième patte 36B.

Ainsi, lorsque les parties 18A et 18B des ailes sont repliées contre la face intérieure de la bande, les deux pattes 34A et 34B sont juxtaposées en étant séparées par une découpe 31 qui correspond au prolongement des bords longitudinaux des deux ailes, de même que les deux pattes 36A et 36B sont juxtaposées en étant séparées par une découpe 33.

Les deux pattes 34A et 34B passent à travers la fenêtre 20 pour être disposées du côté extérieur de l'extrémité 10A de la bande, comme on le voit sur les figures 3 et 4. On pourrait également prévoir que, du côté arrière de la semelle du boîtier, les deux pattes 36A et 36B passent à travers la fenêtre 22, dont les dimensions seraient sensiblement égales à celle de la fenêtre 20, pour venir se placer du côté extérieur de la bande.

Toutefois, selon la variante avantageuse représentée, seule la patte 36B passe dans la fenêtre 22, tandis que la patte 36A est, comme le reste de la partie 18A de la semelle, située contre la face intérieure 11A. En effet, la fenêtre 22 a une largeur seulement adaptée à lui permettre de recevoir la patte 36B. Cette fenêtre s'interrompt sensiblement sur l'axe médian de la bande de telle sorte que la bande reste pleine dans la région dans laquelle elle coopère avec la patte 36A.

Cette variante avantageuse permet d'éviter la tendance au basculement du boîtier par rapport à la bande lors du serrage du collier. En effet, sous l'action du couple de serrage, une partie du mouvement de rotation de la vis est transformée en une force de traction qui serre le collier, tandis qu'une autre partie donne, sous l'effet des frottements, un couple qui a tendance à faire tourner le collier autour de l'axe de la vis. Lorsque la liaison entre le boîtier et la bande est soumise à ce couple parasite, appelé "couple de renversement", la patte 36A fournit un effort de réaction contre la face intérieure de la bande repoussant d'autant la limite du basculement.

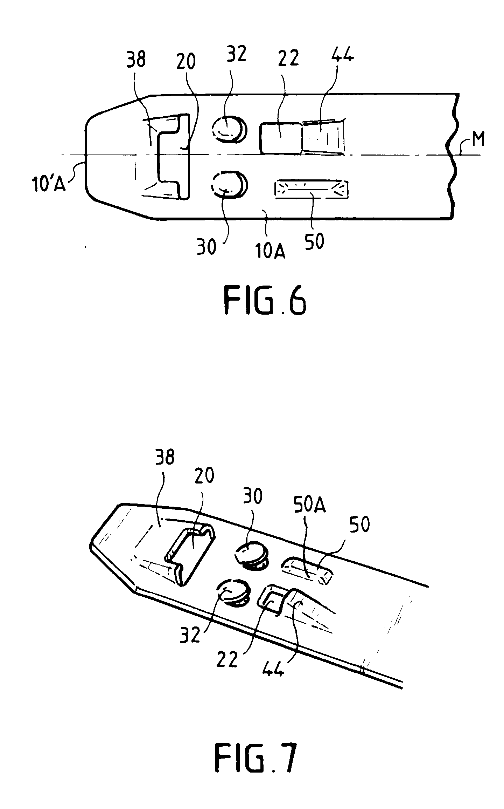

Sur la figure 5, on voit en perspective la première extrémité 10A de la bande, du côté extérieur de cette dernière. On distingue ainsi les faces extérieures des éléments qui forment les bossages 30 et 32. A l'avant de ces bossages, c'est-à-dire entre lesdits bossages et l'extrémité libre 10'A, se trouve la fenêtre 20 qui reçoit les deux pattes 34A et 34B. Le bord avant de cette fenêtre est ménagé dans une légère dépression 38 qui permet que les pattes 34A et 34B se trouvent du côté extérieur de la bande tout en restant sensiblement au niveau de la face extérieure de ladite bande.

A l'arrière des bossages 30 et 32, se trouve la fenêtre 22 à travers laquelle passe seulement la patte 36B. A côté de cette fenêtre est ménagé un soyage 40 qui forme un renfoncement sur la face intérieure de la bande. Dans la région de la fenêtre 22 et du soyage 40 est réalisé un ressaut 42. Ainsi, l'épaisseur de la semelle 18 du boîtier peut être logée dans la hauteur de ce ressaut, c'est-à-dire que la face intérieure de cette semelle se trouve sensiblement sur le même rayon que la face intérieure 11A de la bande lorsque le collier est fermé. La patte 36A qui reste du côté intérieur de la bande est logée dans le renfoncement formé sous le soyage 40 et est calée latéralement par les bords longitudinaux de ce soyage. Celui-ci est en effet non seulement réalisé par emboutissage, mais également par une découpe longitudinale 41 au moins du côté opposé à la fenêtre 22, laissant subsister un bord vif de blocage 41A.

Les figures 6 et 7 montrent une variante de réalisation pour les moyens de fixation. On reconnaît sur ces figures les bossages 30 et 32 analogues à ceux des figures précédentes, ces bossages apparaissant en creux sur la figure 6. La fenêtre 20 a également son bord avant formé dans une dépression 38. Cette fois, le ressaut 42 de la figure 5 est absent, la face extérieure de la bande restant sur un même rayon.

Toutefois, la fenêtre arrière 22 présente un bord arrière logé dans une dépression 44 formée en creux sur la face extérieure de la bande. Ainsi, la patte 36B peut se loger dans l'épaisseur de cette dépression de telle sorte que sa face extérieure se trouve sur le même rayon que la face extérieure de la portion de bande 10A. Un embouti 50 est formé le long du bord longitudinal de la bande, de l'autre côté de l'axe médian M de cette bande par rapport à la fenêtre 22. Considérés depuis la face intérieure de la bande visible sur la figure 7, les dépressions 38 et 44 et l'embouti 50 forment des bossages. Le bord longitudinal 50A de l'embouti 50 en saillie sur la face intérieure de la bande forme un bord vif de blocage longitudinal. Ainsi, la patte 36A de la semelle du boîtier qui reste disposée contre la face intérieure de la bande est parfaitement calée entre le bossage formé par la dépression 44 et ce bord vif 50A. L'espace libre ménagé sur cette face entre l'embouti 50 et la dépression 44 forme donc, comme sur la figure 5, un soyage qui reçoit la patte 36A.

Dans l'exemple avantageux représenté, les ajours 26 et 28 sont constitués par de simples perçages circulaires de la semelle du boîtier, respectivement pratiqués dans les parties 18A et 18B des ailes 17A et 17B. Ces ajours sont réalisés dans une région centrale de ces parties 18A et 18B. Les crevés 30 et 32 sont réalisés de telle sorte que leurs bords cisaillés 30 et 32A présentent un contour épousant la forme du bord des ajours, par exemple un contour partiellement circulaire.

## Revendications

1. Collier de serrage comprenant une bande de métal (10) enroulée sur elle-même, une vis de serrage (12) et un boîtier (14) fixé à une première extrémité de la bande (10A), ce boîtier présentant un capot disposé du côté extérieur de la bande et une semelle (18) qui s'étend contre la face intérieure (11A) de la bande et qui est fixée à cette dernière par des moyens de fixation, lesdits moyens de fixation comprenant au moins une fenêtre (20, 22) pratiquée dans la première extrémité (10A) de la bande (10) et au moins une patte ou extension (34A, 34B, 36B) qui est solidaire de la semelle (18) du boîtier (14) et qui pénètre dans cette fenêtre, la vis ayant un fût fileté (12B) qui est engagé dans le capot (16), la deuxième extrémité (10B) de la bande (10) étant susceptible d'être insérée dans le capot, entre le fût fileté (12B) de la vis et la première extrémité (10A) de la bande, le fût fileté de la vis étant susceptible de coopérer avec ladite deuxième extrémité (10B) pour serrer le collier,
caractérisé en ce que les moyens de fixation comportent, en outre, au moins un ensemble de calage longitudinal comprenant un ajour (26, 28) pratiqué dans une région médiane de la semelle (18) du boîtier (14) et un bossage (30, 32), formé en saillie sur la face intérieure (11A) de la bande et pénétrant dans ledit ajour.

2. Collier selon la revendication 1, caractérisé en ce que le bossage (30, 32) du ou de chaque ensemble de calage longitudinal comporte un bord vif (30A, 32A) orienté à l'opposé de l'extrémité libre (10'A) de la première extrémité (10A) de la bande et coopérant avec le bord de l'ajour (26, 28) correspondant situé en vis-à-vis, les effets de réaction s'exerçant sur ledit bord vif (30A, 32A) du bossage (30, 32) et ledit bord de l'ajour (26, 28) avec lequel il coopère.

3. Collier selon la revendication 2, caractérisé en ce que le bossage est formé par un crevé (30, 32).

4. Collier selon l'une quelconque des revendications 1 à 3, caractérisé en ce qu'il comporte deux ensembles de calage longitudinal (26, 30 : 28, 32) disposés de part et d'autre d'un axe longitudinal médian (M) de la bande (10).

5. Collier selon l'une quelconque des revendications 1 à 4, caractérisé en ce que la semelle (18) du boîtier est formée par deux ailes (17A, 17B) de ce boîtier qui sont repliées (18A, 18B) sous la face intérieure (11A) de la bande (10) et en ce qu'il comporte un ensemble de calage longitudinal (26, 30 ; 28, 32) pour chacune de ces deux ailes.

6. Collier selon l'une quelconque des revendications 1 à 5, caractérisé en ce que les moyens de fixation comprennent deux ensembles de fixation comprenant chacun une fenêtre (20) ménagée dans la bande (10) et un élément de fixation (34A, 34B) qui est solidaire de la semelle (18) du boîtier (14) et qui passe à travers cette fenêtre, ces deux ensembles étant respectivement situés de part et d'autre d'une région (T) de la semelle transversale à la bande.

7. Collier selon l'une quelconque des revendications 1 à 6, caractérisé en ce que les moyens de fixation comprennent, en outre, deux ensembles de fixation comprenant chacun une fenêtre (20 ; 22) ménagée dans la bande (10) et un élément de fixation (34A, 34B ; 36A, 36B) qui est solidaire de la semelle (18) du boîtier (14) et qui coopère avec cette fenêtre, ces deux ensembles étant respectivement situés de part et d'autre d'une région (T) de la semelle transversale à la bande et en ce que, pour au moins l'un desdits ensembles, l'élément de fixation comporte deux pattes (36A, 36B) séparées par une découpe longitudinale (33), seule l'une (36B) de ces deux pattes traversant la fenêtre (22) de l'ensemble de fixation, tandis que l'autre patte (36A) s'étend contre la face intérieure (11A) de la bande (10).

8. Collier selon l'une quelconque des revendications 6 et 7, caractérisé en ce que la semelle (18) du boîtier est formée par deux ailes (17A, 17B) de ce boîtier qui sont repliées (18A, 18B) sous la face intérieure (11A) de la bande (10) et en ce que chaque élément de fixation comprend deux pattes (30A, 30B ; 32A, 32B) qui sont respectivement solidaires de chacune des deux ailes du boîtier et qui sont disposées l'une à côté de l'autre.
